Europäisches Patentamt

(19) European Patent Office

Office européen des brevets

(11) Numéro de publication : **0 285 631 B1**

(12) **FASCICULE DE BREVET EUROPEEN**

(45) Date de publication du fascicule du brevet :
03.04.91 Bulletin 91/14

(51) Int. Cl.⁵ : **B29C 71/04, // B29L7/00**

(21) Numéro de dépôt : 87906582.9

(22) Date de dépôt : 06.10.87

(86) Numéro de dépôt international :
PCT/FR87/00380

(87) Numéro de publication internationale :
WO 88/02692 21.04.88 Gazette 88/09

(54) **FILMS COMPORTANT DANS LEUR EPAISSEUR TROIS ZONES SUPERPOSEES DONT AU MOINS UNE ZONE ISOLANTE ET AU MOINS UNE ZONE CONDUCTRICE, ET LEUR FABRICATION PAR IRRADIATION D'UN FILM DE POLYMERE AU MOYEN D'UN FAISCEAU D'IONS ENERGETIQUES.**

(30) Priorité : 10.10.86 FR 8614111

(43) Date de publication de la demande :
12.10.88 Bulletin 88/41

(45) Mention de la délivrance du brevet :
03.04.91 Bulletin 91/14

(84) Etats contractants désignés :
BE CH DE FR GB IT LI

(56) Documents cités :
DD-A- 161 232
GB-A- 2 071 673
US-A- 4 199 650
Journal of Applied Physics, vol. 56, no 10, 15 Novembre 1984, American Institute of Physics, ( New York, US ), T. Venkatesan et al. : "Structural and chemical analysis of ion beam produced conductive regions on highly resistive organic films", pages 2778 - 2787 voir le document en entier
Annales de Physique, vol. 11, colloque no 1, supplément au no.1, Février 1986, Journées Films Organiques Modification des Surfaces et Propriétés Induites, 13-14 Juin 1985, Orsay, les Editions de Physique, ( FR ), J Davenas et al. : "Modification des propriétés superficielles des films organiques par irradiation avec des faisceaux d' ions", pages 107-112, voir le document en entier
Industrie des Plastiques Modernes, vol. 9, no 1, Janvier 1957, ( Paris, FR ), A. Chapiro : " Radiations ionisantes et macromolécules", pages 41-47, voir le document en entier

(56) Documents cités :
G. Schreyer : " Konstruieren mit Kunststoffen ", partie 2, 1972, Carl Hanser Verlag, ( Munich, DE ), D. Heinze : "Verhalten gegüber energiereicher Strahlung ", pages 705-712, voir le document en entier
Journal of American Chemical Society, vol. 77, no 3, Février 1955, ( Gaston, PA, US ), P. Yen-Hsiung Feng et al. : " Electrical and chemical effects of beta-radiation in polystyrene ", pages 847-851, voir le document en entier

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **BALANZAT, Emmanuel**
**89, rue d'Hasting**
**F-14000 Caen (FR)**
Inventeur : **BOIZIAU, Claude**
**29 bis, chemin des Graviers**
**F-91300 Massy (FR)**
Inventeur : **DURAUD, Jean-Paul**
**34, avenue Henri-Barbusse**
**F-94200 Ivry-sur-Seine (FR)**
Inventeur : **LE MOEL, Alain**
**1, rue du Colonel-Marchand**
**F-92370 Chaville (FR)**
Inventeur : **DARNEZ, Charles**
**30, rue Pierre-Curie**
**F-33200 Bordeaux-Cauderan (FR)**

(74) Mandataire : **Des Termes, Monique et al**
**Société Brevatome 25, rue de Ponthieu**
**F-75008 Paris (FR)**

## Description

La présente invention a pour objet un procédé de fabrication de films comportant dans leur épaisseur trois zones superposées dont au moins une zone à caractère semi-métallique et au moins une zone à caractère isolant électrique, à partir de films de polymère organique que l'on soumet à une irradiation au moyen de faisceaux d'ions énergétiques.

Les structures obtenues par ce procédé présentent des propriétés électriques et/ou optiques intéressantes ; aussi ce procédé peut être utilisé avantageusement dans des domaines très divers, par exemple en microélectronique, en optoélectronique, en optique intégrée, en optique non linéaire, dans le domaine des télécommunications et des systèmes pour le contrôle des informations optiques ainsi que pour la réalisation d'écrans plats. Il s'applique en particulier à la réalisation d'interconnexions électriques enterrées ou en surface.

L'irradiation de matériaux organiques au moyen de faisceaux d'ions énergétiques est une technique connue qui a été décrite en particulier par T. VENKATESAN et al dans J. Appl. Phys. 56 (10), 15 novembre 1984, pp 2778 à 2787, et par J. DAVENAS et al dans Annales de Physique, Colloque n°1, supplément au n°1, vol. 11, février 1986, pp. 107 à 112.

Ainsi, dans l'article de T. VENKATESAN et al, on étudie l'influence d'une irradiation par des ions argon, sur la structure et les propriétés électriques de films en dianhydride 3,4,9,10-pérylène tétracarboxylique et en phtalocyanine de nickel. Il est indiqué dans cet article que l'irradiation par des ions énergétiques conduit à une destruction de la structure moléculaire par rupture de certaines liaisons et perte de certains éléments entrant dans la constitution du film, ce qui a pour conséquence un enrichissement en carbone du film et une augmentation de sa conductivité électrique. Dans l'article de J. DAVENAS et al, on étudie la modification des propriétés superficielles de films organiques en polymère soumis à une irradiation par des faisceaux d'ions ayant une énergie de 500 KeV. Dans ce cas, il se produit également des ruptures de liaison chimique avec émission d'un atome d'hydrogène, et l'on améliore ainsi la conductivité électrique du polymère.

Le document DD-A- 161 232 décrit également la possibilité de transformer une couche de polymère organique isolante en couche conductrice par irradiation, et de former ainsi sur la surface du film des zones conductrices et des zones isolantes occupant toute l'épaisseur du film.

Ainsi, jusqu'à présent, les irradiations au moyen de faisceaux d'ions énergétiques n'ont pas permis de former dans l'épaisseur d'un film des structures comportant trois couches superposées alternées isolant/semi-métal.

La présente invention a précisément pour objet un procédé permettant de réaliser de telles structures dans un film de polymère organique.

Le procédé, selon l'invention, pour former dans l'épaisseur d'un film une structure comportant trois couches superposées ayant alternativement un caractère isolant et un caractère semi-métallique, consiste à soumettre au moins certaines zones de la surface d'un film de polymère organique électriquement isolant à une irradiation au moyen d'un faisceau d'ions énergétiques ayant une énergie suffisante pour que les ions traversent le film de polymère.

De préférence, l'énergie des ions est d'au moins 1MeV/u.m.a (unité de masse atomique).

Selon l'invention, l'utilisation d'ions ayant une énergie d'au moins 1 MeV/u.m.a permet d'obtenir une perturbation et une modification du film de polymère en utilisant les interactions électroniques entre les ions qui traversent le film de polymère et les chaînes de ce polymère.

En effet, un ion lourd fortement énergétique (dont l'énergie est supérieure à 1 MeV par nucléon) produit, dans la matière qu'il traverse, une trace linéaire correspondant à une perturbation intense du matériau ; le diamètre de cette trace latente peut aller de 1 à 100 nm. Dans un polymère, cette perturbation se traduit par des modifications structurales de l'architecture intra et intermoléculaire du polymère ; elle conduit en particulier à la formation de macro-radicaux libres et, pour des fluences élevées, à la perte d'identité du polymère par dégradation du squelette. La nature et la densité de ces transformations dépendent du polymère irradié, des ions utilisés, de leur énergie primaire et de leur perte d'énergie dans le film de polymère ; cette perte d'énergie dépend en particulier de l'épaisseur du film de polymère irradié, car la perte d'énergie évolue le long de la trajectoire de l'ion de façon plus ou moins importante suivant la nature et l'énergie primaire de l'ion. La nature et la densité des transformations produites dans le polymère sont également fonction de la fluence d'irradiation et de l'atmosphère dans laquelle est réalisée cette irradiation.

Aussi, en choisissant de façon appropriée les ions utilisés, leur énergie primaire, la fluence d'irradiation et l'atmosphère d'irradiation, on peut contrôler la nature et la densité des transformations produites dans le film de polymère organique et orienter celles-ci, soit vers l'obtention d'une structure formée de trois couches superposées constituées par une première couche à caractère semi-métallique, une deuxième couche à caractère isolant et une troisième couche à caractère semi-métallique, soit vers l'obtention d'un film formé de trois couches superposées constituées par une première couche électriquement isolante, une deuxième couche à caractère semi-métallique et une troisième couche électriquement isolante.

Ainsi, selon un premier mode de mise en oeuvre du procédé de l'invention, adapté à la formation dans l'épaisseur du film, aux emplacements qui correspondent aux zones irradiées, d'une structure constituée de trois couches superposées qui sont respectivement une première couche à caractère semi-métallique, une deuxième couche électriquement isolante et une troisième couche à caractère semi-métallique, on réalise l'irradiation sous vide et l'on utilise des ions légers ou des ions ayant un faible pouvoir d'arrêt avec des conditions d'irradiation telles que l'on modifie uniquement les surfaces opposées du film qui correspondent aux zones irradiées en conférant à ces surfaces un caractère semi-métallique.

Dans ce cas, les ions ont une énergie suffisante pour traverser la totalité du film de polymère organique, mais leur perte d'énergie dans le film reste faible de sorte que seules les couches superficielles opposées du film sont modifiées sur une épaisseur qui peut aller de 0,1 à quelques μm. Celles-ci sont appauvries en éléments volatils tels que H et donc enrichies en carbone, ce qui leur confère un caractère semi-métallique. Les couches superficielles du film de polymère subissent aussi une modification plus importante que te reste du film en raison d'une possibilité accrue de désorption des espèces chimiques.

L'énergie des ions incidents et la fluence du faisceau, c'est-à-dire le nombre d'ions par cm², sont choisies en fonction de la nature du polymère et des ions utilisés.

Ainsi, lorsque le polymère est du fluorure de polyvinylidène et les ions sont des ions krypton, la fluence du faisceau doit être inférieure à $10^{12}$ ions.cm⁻² pour une énergie des ions incidents de 3800 MeV.

Lorsque l'on utilise des ions oxygène avec un film de fluorure de polyvinylidène, on peut obtenir cette structure de couches alternées semi-métal/isolant/semi-métal en utilisant des fluences inférieures $10^{13}$ à ions.cm⁻² pour une énergie des ions incidents de 800 MeV.

Lorsque l'on utilise des ions krypton avec un film de polytétrafluoroéthylène, on peut obtenir une structure semi-métal/isolant/semi-métal avec des fluences inférieures à $10^{13}$ ions.cm⁻² pour une énergie des ions incidents de 3800 MeV.

Selon un deuxième mode de mise en oeuvre du procédé de l'invention, adapté à la formation dans l'épaisseur du film, aux emplacements qui correspondent aux zones irradiées, d'une structure constituée de trois couches superposées qui sont respectivement une première couche électriquement isolante, une deuxième couche à caractère semi-métallique et une troisième couche électriquement isolante, on réalise l'irradiation en atmosphère confinée dans une enceinte étanche, et on utilise des ions lourds ou des ions ayant un fort pouvoir d'arrêt avec des conditions d'irradiation et une énergie des ions incidents telles que l'on modifie la totalité de l'épaisseur du film de polymère organique sur les zones irradiées. Dans ce cas, on utilise généralement des fluences élevées ;

ainsi on obtient des interactions des ions avec la totalité du film, et lors de ces interactions, le polymère perd la presque totalité de ses éléments les plus volatils et se transforme en film ayant un caractère semi-métallique. Cependant, grâce à l'emploi d'une enceinte étanche et d'une atmosphère confinée, les espèces réactives désorbées peuvent réagir entre elles sur les couches superficielles du film et reconstituer ainsi sur ces couches superficielles un polymère électriquement isolant.

Selon une variante de ce deuxième mode de mise en oeuvre du procédé de l'invention, on peut favoriser la reconstitution d'une couche isolante sur les couches superficielles des zones irradiées du film en réalisant l'irradiation dans une atmosphère de gaz réactif.

Ainsi, par réaction des espèces réactives désorbées du film de polymère irradié avec les réactifs gazeux présents dans l'enceinte, on pourra former sur la surface du film des couches isolantes.

A titre d'exemples, le réactif gazeux peut être constitué par des composés halogénés ou hydrohalogénés, par exemple du chlore ou du fluor, des dérivés cyanés, des dérivés du bore, des dérivés du silicium ou des dérivés de l'azote. On peut aussi utiliser comme réactif gazeux un monomère qui réagira avec le polymère modifié par irradiation en formant un copolymère ou un alliage de polymères sur les surfaces du film.

Le monomère utilisé est un monomère polymérisable comportant au moins une insaturation éthylénique.

A titre d'exemples non limitatifs de tels monomères, on peut citer l'éthylène, le tétrafluoroéthylène et leurs dérivés, le butadiène et ses dérivés, le styrène et ses dérivés, l'acrylamide et ses dérivés, l'acrylonitrile et l'allyl glycidyl éther, les isomères de la vinyl pyridine et leurs dérivés, les esters de l'acide acrylique et de l'acide méthacrylique, et en particulier, le méthacrylate d'hydroxyéthyle ainsi que le méthacrylate de diméthylamino éthyle, la N-vinyl pyrrolidone et la N-vinyl caprolactone.

Selon l'invention, comme on l'a vu précédemment, les conditions d'irradiation sont choisies en fonction des ions utilisés, de la nature du film de polymère organique et de l'épaisseur de ce film pour obtenir la modification souhaitée.

La dose d'irradiation intégrée Di (en Mrad) qui correspond à l'énergie déposée dans le film, est en relation avec le pouvoir d'arrêt électronique $\Delta E$ (en MeV.mg⁻¹.cm²) des ions dans le film et la fluence F (en ions.cm⁻²) du faisceau d'ions de la façon suivante :

$$Di = \Delta E \times 1,6.10^{-11} F$$

Ainsi, on peut agir sur la dose d'irradiation intégrée, la fluence du faisceau d'ions et l'énergie des ions incidents pour obtenir une perte d'énergie des ions dans le film permettant d'obtenir les modifications voulues.

La perte d'énergie dépend également de la nature du film de polymère organique et de son épaisseur et ces paramètres doivent être établis dans chaque cas particulier ; ceux-ci peuvent être déterminés d'après les Annales de Physique : F. Hubert, A. Fleury, R. Bimbot and D. Gardes, "Range and stopping power tables for 2.5-100 MeV/nucleon. heavy ions in solids", (1980), vol. 5, ed. Masson.

Les polymères qui peuvent être modifiés par le procédé de l'invention sont des polymères qui, par interaction avec un faisceau d'ions énergétiques, peuvent conduire à des dérivés comportant des insaturations éthyléniques et/ou acétyléniques, par exemple des structures de type polydiénique $\{CH=CH-CH=CH\}$, des structures polyalléniques $\{CH=C=CH\}$, des structures polyacétyléniques et polydiacétyléniques du type $\{C\ C-CH_2-C\ C\}$ ou des structures de type cumulène $\{C=C=C=C\}$. On peut aussi utiliser des polymères à chaîne linéaire comportant de l'azote, du phosphore, du silicium, du soufre, de l'oxygène.

A titre d'exemples de polymères utilisables dans l'invention, on peut citer les polyoléfines et leurs dérivés, par exemple le polyéthylène et le polypropylène; les polymères halogénocarbonés, par exemple les polymères fluorocarbonés comme le polytétrafluoréthylène, le fluorure de polyvinylidène et le fluorure de polyvinyle, les polymères chlorocarbonés comme le chlorure de polyvinylidène et le chlorure de polyvinyle, et les polymères iodocarbonés et bromocarbonés ; les polymères hydrohalogénocarbonés et leurs dérivés ; les copolymères de monomères halogénocarbonés et hydrohalogénocarbonés ; les polymères pseudo-halogénés, comme les polymères cyanés, isocyanés et leurs dérivés, par exemple le polyacrylonitrile et le polydicyanoéthylène ; les polyamides ; les polyimides ; les polyesters ; les polysilanes ; les polysiloxanes ; les polysulfones ; les polyéthers et les polyphosphazines.

Le film de polymère organique a une épaisseur de 0,1 µm à 1 mm.

Les ions susceptibles d'être utilisés dans l'invention peuvent être de différentes natures. On peut utiliser en particulier des ions oxygène, des ions néon, des ions argon, des ions xénon, des ions krypton et des ions uranium. Dans le second mode de mise en oeuvre du procédé, on utilise plutôt des ions lourds comme les ions krypton.

L'irradiation peut être réalisée à la température ambiante ou à des températures supérieures, par exemple allant de 20 à 80°C.

On peut aussi réaliser l'irradiation à basse température, en particulier lorsque les polymères qui constituent le film, se restructurent trop rapidement après modification par le faisceau d'ions. Ainsi, dans le cas du polyéthylène, il peut être intéressant de réaliser l'irradiation à la température de l'azote liquide pour empêcher cette restructuration.

Généralement, on réalise l'irradiation sous vide ; on peut toutefois réaliser l'irradiation dans d'autres atmosphères, par exemple en atmosphère de gaz neutre ou à l'air lorsque les réactions éventuelles du polymère avec l'oxygène de l'air ne sont pas néfastes pour la modification recherchée.

Dans le deuxième mode de mise en oeuvre du procédé, on réalise de plus l'irradiation dans une enceinte étanche confinée afin que les espèces réactives désorbées du film puissent réagir entre elles à la surface du film au lieu d'être dispersées dans l'enceinte.

Dans les deux modes de mise en oeuvre du procédé de l'invention, l'irradiation est réalisée en utilisant des appareillages classiques, par exemple des accélérateurs à ions lourds capables de produire des faisceaux d'ions ayant une énergie d'au moins 1 MeV/u.m.a.

Pour obtenir des ions incidents ayant une énergie inférieure à celle que possèdent les ions sortant de l'accélérateur, on peut utiliser des atténuateurs ou irradier simultanément plusieurs films disposés en empilement, de sorte que les derniers films de l'empilement reçoivent des ions d'énergie voulue.

Généralement, les films soumis à l'irradiation sont suspendus sur le trajet du faisceau d'ions pour pouvoir être traversés par celui-ci sans être au contact avec un support.

Dans certains cas, on peut toutefois les disposer sur un support approprié, pendant l'irradiation.

Lorsque l'on souhaite réaliser l'irradiation seulement sur certaines zones du film, on peut utiliser un appareillage permettant d'effectuer l'irradiation de la surface du film seulement sur les zones voulues. On peut aussi utiliser des masques.

Ce mode d'irradiation du film permet en particulier de réaliser des connexions électriques enterrées dans le film ou à la surface de celui-ci.

L'invention a également pour objet un film de 0,1 µm à 1 mm d'épaisseur formé de couches alternées obtenu par ce procédé.

Selon le premier mode de réalisation de l'invention, ce film comporte dans son épaisseur une structure constituée successivement d'une première couche à caractère semi-métallique, d'une deuxième couche électriquement isolante et d'une troisième couche à caractère semi-métallique, la couche électriquement isolante est constituée par un polymère organique et la couche à caractère semi-métallique est constituée par un dérivé de ce polymère organique.

Selon le second mode de réalisation de l'invention, ce film comporte dans son épaisseur une structure constituée successivement d'une couche électriquement isolante, d'une deuxième couche à caractère semi-métallique et d'une troisième couche électriquement isolante, les couches électriquement isolantes sont constituées par un polymère organique et la couche à caractère semi-métallique est constituée par un dérivé de ce polymère organique.

Dans ces deux modes de réalisation de l'invention, le dérivé du polymère organique constituant la couche à caractère semi-métallique peut comporter des insaturations éthyléniques et/ou acétyléniques, par exemple avoir une structure polyallénique.

Les exemples suivants sont donnés bien entendu à titre non limitatif pour illustrer l'invention, et se réfèrent au dessin annexé sur lequel :
   – la figure 1 représente un film semi-métal/isolant/semi-métal conforme à l'invention, et
   – la figure 2 représente un film isolant/semi-métal/isolant conforme à l'invention.

## EXEMPLE 1

Dans cet exemple, on prépare, selon le premier mode de mise en oeuvre du procédé de l'invention, une structure semi-métal/isolant/semi-métal à partir d'un film de fluorure de polyvinylidène de 25 micromètres d'épaisseur.

Dans cet exemple, on utilise un faisceau d'ions oxygène et l'irradiation est réalisée dans les conditions suivantes :
   – Pression : 1,35.10⁻⁴ Pa (10⁻⁶ Torr),
   – Température : 30°C,
   – Energie des ions oxygène incidents : 800 MeV,
   – Dose intégrée : 4,3 Mrads,
   – Fluence : 3,6.10¹¹ ions.cm⁻², et
   – Perte d'énergie de l'ion : 0,74 MeV.mg⁻¹ cm².

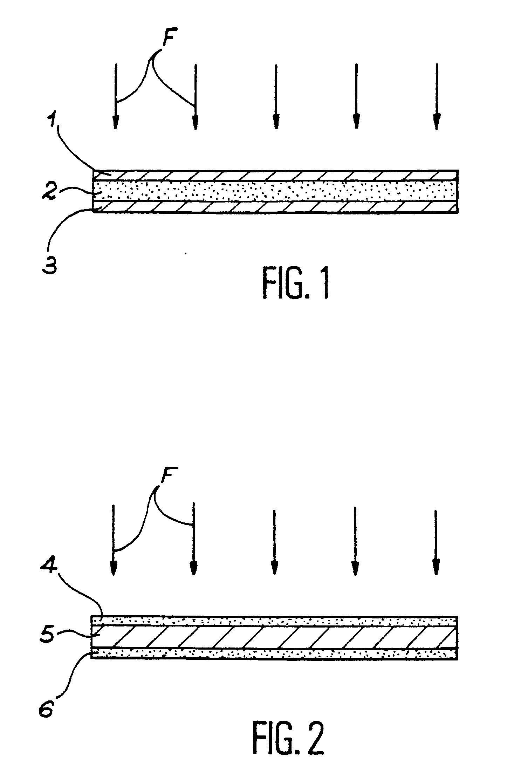

Sur la figure 1, on a représenté en coupe verticale le film obtenu après irradiation suivant le trajet des flèches F. Ce film comprend une première couche 1 à caractère semi-métallique, une deuxième couche 2 à caractère isolant et une troisième couche 3 à caractère semi-métallique.

On analyse le film par spectroscopie de photoémission X en utilisant une source monochromatée AlK α = 1486,6 eV.

On remarque ainsi que le film présente sur ces surfaces opposées 1 et 3 des zones modifiées par la présence de polyallène. Sur ces surfaces, le rapport d'intensité des groupements caractéristiques du polyallène, c'est-à-dire du polymère modifié, par rapport aux groupements du polymère non modifié est de 50,7%.

On analyse également le film par résonance paramagnétique électronique et l'on constate ainsi que le coeur du film n'a pas été modifié.

## EXEMPLE 2

On prépare comme dans l'exemple 1 une structure semi-métal/isolant/semi-métal en irradiant un film de fluorure de polyvinylidène de 25 micromètres d'épaisseur au moyen d'ions oxygène dans les conditions suivantes :
   – Pression : 1,35.10⁻⁴Pa (10⁻⁶ Torr),
   – Température : 30°C,
   – Energie des ions oxygène : 60 MeV,
   – Dose intégrée : 18,4 Mrads,
   – Fluence : 3,6.10¹¹ ions.cm⁻², et
   – Perte d'énergie de l'ion : 3,16 MeV.mg⁻¹ .cm².

On analyse le film comme dans l'exemple 1 par spectroscopie de photoémission X et par résonance paramagnétique électronique. On constate ainsi que le rapport d'intensité, c'est-à-dire le rapport correspondant au polymère modifié est de 65%. La modification est donc plus importante que dans l'exemple 1.

En revanche, le coeur du film est pratiquement inchangé ; seuls quelques radicaux provenant des scissions des chaînes principales sont détectés.

Ainsi, le fait d'utiliser des ions moins énergétiques qui ont une perte d'énergie plus importante, mais une dose intégrée plus élevée, augmente le taux de modification en surface du film de polymère, sans que le coeur soit modifié.

## EXEMPLE 3

Dans cet exemple, on forme, à partir d'une feuille de fluorure de polyvinylidène de 50 micromètres d'épaisseur, une structure semi-métal/isolant/semi-métal en utilisant le premier mode de mise en oeuvre du procédé de l'invention. On réalise l'irradiation au moyen d'un faisceau d'ions oxygène dans les conditions suivantes :
   – Pression : 1,35.10⁻⁴ Pa (.10⁻⁶ Torr),
   – Température : inférieure à 40°C,
   – Energie des ions oxygène : 800 MeV,
   – Dose intégrée : 28 Mrads,
   – Fluence : 2,4.10¹² ions.cm⁻², et
   – Perte d'énergie de l'ion : 0,74 MeV.mg⁻¹.cm².

L'analyse du film par spectroscopie de photoémission X et par résonance paramagnétique électronique montre que le rapport d'intensité correspondant à la zone modifiée est de 62% et que la zone de coeur du film est pratiquement inchangée.

## EXEMPLE 4

On utilise le premier mode de mise en oeuvre du procédé de l'invention pour obtenir à partir de la feuille de fluorure de polyvinylidène de l'exemple 3 une structure semi-métal/isolant/semi-métal. L'irradiation est réalisée au moyen d'un faisceau d'ions oxygène dans les conditions suivantes :
   – Pression : 1,35.10⁻⁴ Pa (10⁻⁶ Torr),
   – Température : inférieure à 40°C,
   – Energie des ions oxygène : 60 MeV,
   – Dose intégrée : 127 Mrads,
   – Fluence : 2,4.10¹² ions.cm⁻², et

– Perte d'énergie de l'ion : 3,16 MeV.mg$^{-1}$.cm$^2$.

On analyse le film par spectroscopie de photoémission X et par résonance paramagnétique électronique. On constate ainsi que le rapport d'intensité correspondant à la zone modifiée est de 79%, et que la zone de coeur du film est caractéristique du polymère d'origine ayant subi quelques scissions de chaîne principale.

### EXEMPLE 5

On utilise le premier mode de mise en oeuvre du procédé de l'invention pour obtenir à partir d'une feuille de fluorure de polyvinylidène de 25 micromètres d'épaisseur une structure semi-métal/isolant/semi-métal. L'irradiation est réalisée au moyen d'un faisceau d'ions krypton dans les conditions suivantes:
- Pression : 1,35.10$^{-4}$ Pa (10$^{-6}$ Torr),
- Température : < 60°C,
- Energie des ions krypton : 3800 MeV,
- Dose intégrée : 39,6 Mrads,
- Fluence : 1,35.10$^{11}$ ions.cm$^{-2}$, et
- Perte d'énergie de l'ion : 17,5 MeV.mg$^{-1}$.cm$^2$.

On analyse ensuite le film par spectroscopie de photoémission X et par résonance paramagnétique électronique. On constate ainsi que le rapport d'intensité correspondant à la zone modifiée est de 33,4% et que la zone de coeur du film est pratiquement inchangée.

### EXEMPLE 6

Dans cet exemple, on utilise le deuxième mode de mise en oeuvre du procédé de l'invention pour réaliser une structure isolant/semi-métal/isolant à partir de la feuille de fluorure polyvinylidène de l'exemple 5. L'irradiation est réalisée au moyen d'ions krypton dans les conditions suivantes :
- Pression : 1,35.10$^{-4}$ Pa (10$^{-6}$ Torr),
- Température : < 60°C,
- Energie des ions krypton : 110 MeV,
- Dose intégrée : 81,4 Mrads,
- Fluence : 1,35.10$^{11}$ ions.cm$^{-2}$, et
- Perte d'énergie de l'ion : 52 MeV.mg$^{-1}$.cm$^2$.

Sur la figure 2, on a représenté en coupe verticale le film obtenu après irradiation suivant le trajet des flèches F. Ce film comprend une première couche 4 à caractère isolant, une deuxième couche 5 à caractère semi-métallique et une troisième couche 6 à caractère isolant.

On analyse ce film par spectroscopie de photoémission X et par résonance paramagnétique électronique. On constate ainsi que les couches superficielles 4 et 6 du film sont inchangées car le rapport d'intensité correspondant à la zone modifiée n'est que de 4,8%. En revanche, l'analyse par résonance paramagnétique électronique montre que le coeur 5 du film est constitué par des groupements polyényle conducteurs.

### EXEMPLE 7

Dans cet exemple, on réalise une structure isolant/semi-métal/isolant à partir d'une feuille de chlorure de polyvinylidène de 50 micromètres d'épaisseur en utilisant le second mode de mise en oeuvre du procédé. L'irradiation est réalisée au moyen d'ions krypton dans les conditions suivantes :
- Pression : 1,35.10$^{-4}$ Pa (10$^{-6}$ Torr),
- Température : < 60°C,
- Energie des ions krypton : 3800 MeV,
- Dose intégrée : 11,1 Mrads,
- Fluence : 3,80.10$^{10}$ ions.cm$^{-2}$, et
- Perte énergie de l'ion : 18,2 MeV.mg$^{-1}$.cm$^2$.

L'analyse du film par spectroscopie de photoémission X montre que la surface du film est peu modifiée car le rapport d'intensité correspondant à la zone modifiée est de 8,6%. L'analyse par résonance paramagnétique électronique montre que la zone de coeur est constituée de radicaux polyényle conducteurs.

### EXEMPLE 8

Dans cet exemple, on prépare une structure isolant/semi-métal/isolant à partir d'un film de chlorure de polyvinylidène de 50 micromètres d'épaisseur en utilisant le deuxième mode de mise en oeuvre du procédé de l'invention. L'irradiation est réalisée au moyen d'ions krypton dans les conditions suivantes :
- Pression : 1,35.10$^{-4}$ Pa (10$^{-6}$ Torr),
- Température : < 60°C,
- Energie des ions krypton : 110 MeV,
- Dose intégrée : 22,9 Mrads,
- Fluence : 3,80.10$^{10}$ ions.cm$^{-2}$, et
- Perte d'énergie de l'ion : 37,5 MeV.mg$^{-1}$.cm$^2$.

L'analyse du film par spectroscopie de photoémission X montre que la surface du film est peu modifiée, le rapport d'intensité de la zone modifiée n'étant que de 6,7%. L'analyse par résonance paramagnétique électronique du film montre que la zone de coeur est constituée de radicaux polyényle conducteurs.

### EXEMPLE 9

Dans cet exemple, on prépare, selon le premier mode de mise en oeuvre du procédé de l'invention, une structure semi-métal/isolant/semi-métal à partir d'une feuille de polytétrafluoroéthylène de 50 micromètres d'épaisseur que l'on irradie par des ions krypton dans les conditions suivantes :
- Pression : 1,35.10$^{-4}$ pa (10$^{-6}$ Torr),
- Température : < 60°C,
- Energie des ions krypton : 3800 MeV,
- Dose intégrée : 34,9 Mrads,
- Fluence : 1,30.10$^{11}$ ions.cm$^{-2}$, et
- Perte d'énergie de l'ion : 17 MeV.mg$^{-1}$.cm$^2$.

L'analyse du film par spectroscopie de photoémission X montre que la surface du film est modifiée par création de composés polydiéniques, le rapport d'intensité en surface de la zone modifiée étant de 16,4%. En revanche, l'analyse par résonance paramagnétique électronique montre que la zone de coeur est très peu perturbée car elle ne renferme que quelques radicaux créés par rupture des chaînes principales.

On remarque ainsi que le procédé de l'invention permet d'obtenir des structures différentes selon les ions et les conditions d'irradiation utilisés.

## Revendications

1. Procédé pour former dans l'épaisseur d'un film, une structure constituée de trois couches superposées qui sont respectivement une première couche à caractère semi-métallique, une deuxième couche électriquement isolante et une troisième couche à caractère semi-métallique, consistant à soumettre au moins certaines zones de la surface d'un film de polymère organique électriquement isolant, ayant une épaisseur de 0,1 μm à 1mm, à une irradiation sous vide au moyen d'un faisceau d'ions énergétiques ayant une énergie suffisante pour que les ions traversent le film de polymère, en utilisant des ions légers ou des ions ayant un faible pouvoir d'arrêt avec des conditions d'irradiation telles que l'on modifie uniquement les surfaces opposées du film qui correspondent aux zones irradiées en conférant à ces surfaces un caractère semi-métallique.

2. Procédé pour former dans l'épaisseur d'un film une structure constituée de trois couches superposées qui sont respectivement une première couche électriquement isolante, une deuxième couche à caractère semi-métallique et une troisième couche électriquement isolante, consistant à soumettre au moins certaines zones de la surface d'un film de polymère organique électriquement isolant, ayant une épaisseur de 0,1 μm à 1mm à une irradiation en atmosphère confinée dans une enceinte étanche au moyen d'un faisceau d'ions énergétiques ayant une énergie suffisante pour que les ions traversent le film de polymère en utilisant des ions lourds ou des ions ayant un fort pouvoir d'arrêt avec des conditions d'irradiation et une énergie des ions incidents telles que l'on modifie la totalité de l'épaisseur du film de polymère organique sur les zones irradiées.

3. Procédé selon l'une quelconque des revendications 1 et 2, caractérisé en ce que l'énergie des ions est d'au moins 1 MeV/u.m.a. (unité de masse atomique).

4. Procédé selon la revendication 2, caractérisé en ce que l'on réalise l'irradiation dans une atmosphère de gaz réactif.

5. Procédé selon la revendication 4, caractérisé en ce que le gaz réactif est choisi dans le groupe comprenant les composés halogénés, les composés hydrohalogénés, les dérivés cyanés, les dérivés du bore, les dérivés du silicium et les dérivés de l'azote.

6. Procédé selon la revendication 4, caractérisé en ce que le gaz réactif est un monomètre polymérisable comportant au moins une insaturation éthylénique.

7. Procédé selon l'une quelconque des revendications 1 et 2, caractérisé en ce que l'on irradie la totalité de la surface du film.

8. Procédé selon l'une quelconque des revendications 1 et 2, caractérisé en ce que le polymère organique est choisi dans le groupe comprenant les polyoléfines et leurs dérivés, les polymères fluorés et leurs dérivés, les polymères chlorés et leurs dérivés, les polymères fluorochlorés et leurs dérivés, les polymères hydrohalogénés et leurs dérivés, les polymères pseudohalogénés et leurs dérivés, les polyamides, les polyimides, les polyesters, le polyacrylonitrile et ses dérivés, le polydicyanoéthylène et ses dérivés, les polysilanes, les polysiloxanes, les polysulfones, les polyéthers et les polyphosphazines.

9. Procédé selon la revendication 8, caractérisé en ce que le polymère organique est le fluorure de polyvinylidène, le chlorure de polyvinylidène ou le polytétrafluoroéthylène.

10. Procédé selon la revendication 3, caractérisé en ce que les ions sont des ions oxygène ou des ions krypton.

11. Procédé selon la revendication 1, caractérisé en ce les ions sont des ions krypton.

12. Film ayant une épaisseur de 0,1 μm à 1mm et comportant dans son épaisseur une structure constituée successivement d'une première couche à caractère semi-métallique, d'une deuxième couche électriquement isolante et d'une troisième couche à caractère semi-métallique, la couche électriquement isolante étant constituée par un polymère organique et les couches à caractère semi-métallique étant constituées par un dérivé de ce polymère organique.

13. Film ayant une épaisseur de 0,1 μm à 1 mm et comportant dans son épaisseur une structure constituée successivement d'une couche électriquement isolante, d'une deuxième couche à caractère semi-métallique et d'une troisième couche électriquement isolante, les couches électriquement isolantes étant constituées par un polymère organique et la couche à caractère semi-métallique étant constituée par un dérivé de ce polymère organique.

14. Film selon l'une quelconque des revendications 12 et 13, caractérisé en ce que le polymère organique est choisi dans le groupe comprenant les polyoléfines et leurs dérivés, les polymères fluorés et leurs dérivés, les polymères chlorés et leurs dérivés, les polymères fluorochlorés et leurs dérivés, les polymères hydrohalogénés et leurs dérivés, les polymères pseudo-halogénés et leurs dérivés, les polyamides, les polyimides, les polyesters, le polyacrylonitrile et ses dérivés, le polydicyanoéthylène et ses dérivés, les polysilanes, les polysiloxanes, les polysulfones, les polyéthers et les polyphosphazines.

15. Film selon l'une quelconque des revendications 12 et 13, caractérisé en ce que le polymère organique est du fluorure de polyvinylidène, du chlorure de polyvinylidène ou du polytétrafluoroéthylène.

16. Film selon l'une quelconque des revendications 12 et 13, caractérisé en ce que le dérivé du polymère organique constituant la couche à caractère semi-métallique a une structure polyallénique.

## Ansprüche

1. Verfahren zum Herstellen einer Struktur in der Dicke eines Films, die aus drei übereinander angeordneten Schichten besteht, die jeweils eine erste Schicht mit halbmetallischem Charakter, eine zweite elektrisch isolierende Schicht und eine dritte Schicht mit halbmetallischem Charakter sind, wobei das Verfahren darin besteht, daß man wenigstens bestimmte Zonen der Oberfläche eines elektrisch isolierenden, organischen Polymerfilms mit einer Dicke von 0,1 μm bis 1 mm unter Vakuum einer Strahlung mittels eines energetischen Ionenbündels mit einer hinreichenden Energie, daß die Ionen den Polymerfilm durchqueren, aussetzt, indem man leichte Ionen oder Ionen mit einer geringen Bremsfähigkeit mit solchen Bestrahlungsbedindungen verwendet, daß man nur die gegenüberliegenden Oberflächen des Films verändert, die den bestrahlten Zonen entsprechen, indem man diesen Oberflächen einen halbmetallischen Charakter verleiht.

2. Verfahren zum Herstellen einer Struktur in der Dicke eines Films, die aus drei übereinander angeordneten Schichten besteht, die jeweils eine erste elektrisch isolierende Schicht, eine zweite Schicht mit halbmetallischem Charakter und eine dritte elektrisch isolierende Schicht sind, wobei das Verfahren darin besteht, daß man wenigatens bestimmte Zonen der Oberfläche eines elektrisch Isolierenden, organischen Polymerfilms mit einer Dicke von 0,1 μm bis 1 mm unter abgeschlossener Atmosphäre in einer dichten Hülle einer Strahlung mittels eines energetischen Ionenbündels mit einer hinreichenden Energie, daß die Ionen den Polymerfilm durchqueren, aussetzt, indem man schwere Ionen oder Ionen mit einer hohen Bremsfählgkeit mit solchen Bestrahlungsbedindungen und einer solchen Energie der einfallenden Ionen verwendet, daß man die gesamte Dicke des Films aus organischem Polymer in den bestrahlten Zonen verändert.

3. Verfahren nach einem der Ansprüche 1 und 2, dadurch gekennzeichnet, daß die Ionenenergie wenigstens 1 MeV/amu (atomare Masseneinheit) beträgt.

4. Verfahren nach Anspruch 2, dadurch gekennzeichnet, daß man die Bestrahlung in einer Atmosphäre aus einem reaktiven Gas durchführt.

5. Verfahren nach Anspruch 4, dadurch gekennzeichnet, daß das reaktive Gas aus der Gruppe gewählt wird, die die Halogenverbindungen, die Hydrohalogenverbindungen, die Zyanderivate, die Borderivate, die Siliziumderivate und die Stickstoffderivate umfaßt.

6. Verfahren nach Anspruch 4, dadurch gekennzeichnet, daß das reaktive Gas ein polymerisierbares Monomer mit wenigstens einer ungesättigten Äthylgruppe ist.

7. Verfahren nach einem der Ansprüche 1 und 2, dadurch gekennzeichnet, daß man die gesamte Oberflache des Films bestrahlt.

8. Verfahren nach einem der Ansprüche 1 und 2, dadurch gekennzeichnet, daß das organische Polymer aus der Gruppe ausgewählt wird, die die Polyolefine und ihre derivate, die fluorierten Polymere und ihre Derivate, die chlorierten Polymere und ihre Derivate, die fluorchlorierten Polymere und ihre Derivate, hydrohalogenieten Polymere und ihre Derivate, die pseudohydrohalogenierten Polymere und ihre Derivate, die Polyamide, die Polyimide, die Polyester, das Polyakrylnitril und seine Derivate, das Polydizyanoäthylen und seine Derivate, die Polysilane, die Polysiloxane, die Polysulfone, die Polyäther und die Polyphosphazine umfaßt.

9. Verfahren nach Anspruch 8, dadurch gekennzeichnet, daß das organische Polymer das Polyvinylidenfluorid, das Polyvinylidenchlorid oder das Polytetrafluoroäthylen ist.

10. Verfahren nach Anspruch 3, dadurch gekennzeichnet, daß die Ionen Sauerstoff- oder Kryptonionen sind.

11. Verfahren nach Anspruch 1, dadurch gekennzeichnet, daß die Ionen Kryptonionen sind.

12. Film mit einer Dicke von 0,1 μm bis 1 mm und in seiner Dicke eine Struktur aufweisend, die sukzessive aus einer ersten Schicht mit halbmetallischem Charakter, einer zweiten elektrisch isolierenden Schicht und einer dritten Schicht mit halbmetallischem Charakter besteht, wobei die elektrisch isolierende Schicht aus einem organischem Polymer und die Schichten mit halbmetallischem Charakter aus einem Derivat dieses organischen Polymers bestehen.

13. Film mit einer Dicke von 0,1 μm bis 1 mm und in seiner Dicke eine Struktur aufweisend, die sukzessive aus einer ersten elektrisch isolierenden Schicht, einer zweiten Schicht mit halbmetallischem Charakter und einer elektrisch isolierenden dritten Schicht besteht, wobei die elektrisch isolierende Schichten aus einem organischem Polymer und die Schicht mit halbmetallischem Charakter aus einem Derivat dieses organischen Polymers bestehen.

14. Film nach einem der Ansprüche 12 und 13, dadurch gekennzeichnet, daß das organische Polymer aus der Gruppe ausgewählt wird, die die Polyolefine und ihre Derivate, die fluorierten Polymere und ihre Derivate, die chlorierten Polymere und ihre Derivate, die fluorchlorierten Polymere und ihre Derivate, hydrohalogenierten Polymere und ihre Derivate, die pseudohydrohalogenierten Polymere und ihre Derivate, die Polyamide, die Polyimide, die Polyester, das Polyakrylnitril und seine Derivate, das Polydizyanoäthylen und seine Derivate, die Polysilane, die Polysiloxane, die Polysulfone, die Polyäther und die Polyphosphazine umfaßt.

15. Film nach einem der Ansprüche 12 und 13, dadurch gekennzeichnet, daß das organische Polymer das Polyvinylidenfluorid, das Polyvinylidenchlorid oder das Polytetrafluoroäthylen ist.

16. Film nach einem der Ansprüche 12 und 13, dadurch gekennzeichnet, daß das Derivat des organischen Polymers, das die Schicht mit halbmetallischen Charakter bildet, eine Polyallenstruktur besitzt.

## Claims

1. Process for the formation in the thickness of a film of a structure constituted by three superimposed layers, which are respectively a first layer having a semimetallic character, a second electrically insulating layer and a third layer with a semimetallic character, consisting of subjecting at least certain zones of the surface of an electrically insulating, organic polymer film having a thickness of 0.1 μm to 1 mm, to a vacuum irradiation by means of a high energy ion beam with an energy adequate to ensure that the ions traverse the polymer film, using light ions or ions having a low stopping power with irradiation conditions such that modification only takes place to the opposite surfaces of the film corresponding to the irradiated zones by giving said surfaces a semimetallic character.

2. Process for forming in the thickness of a film, a structure constituted by three superimposed layers, which are respectively a first electrically insulating layer, a second layer having a semimetallic character and a third electrically insulating layer consisting of subjecting at least certain zones of the surface of an electrically insulating, organic polymer film, having a thickness of 0,1 μm to 1 mm, to an irradiation in a confined atmosphere in a tight enclosure by means of a high energy ion beam with an energy adequate to ensure that the ions traverse the polymer film using heavy ions or ions having a high stopping power with irradiation conditions and an energy of the incident ions such that the entire thickness of the organic polymer film is modified in the irradiated zones.

3. Process according to either of the claims 1 and 2, characterized in that the energy of the ions is at least 1 MeV/amu (atomic mass unit).

4. Process according to claim 2, characterized in that irradiation is carried out in a reactive gas atmosphere.

5. Process according to claim 4, characterized in that the reactive gas is chosen in the group including halogen compounds, hydrohalogen compounds, cyano derivatives, boron derivatives, silicon derivatives and nitrogen derivatives.

6. Process according to claim 4, characterized in that the reactive gas is a polymerizable monomer having at least one ethylene unsaturation.

7. Process according to either of the claims 1 and 2, characterized in that the entire surface of the film is irradiated.

8. Process according to either of the claims 1 and 2, characterized in that the organic polymer is chosen from the group including polyolefins and their derivatives, fluorine polymers and their derivatives, chlorine polymers and their derivatives, fluorochlorine polymers and their derivatives, hydrohalogen polymers and their derivatives, pseudo-halogen polymers and their derivatives, polyamides, polyimides, polyesters, polyacrylonitrile and its derivatives, polydicyanoethylene and its derivatives, polysilanes, polysiloxanes, polysulphones, polyethers and polyphosphazines.

9. Process according to claim 8, characterized in that the organic polymer is polyvinylidene fluoride, polyvinylidene chloride or polytetrafluoroethylene.

10. Process according to claim 3, characterized in that the ions are oxygen ions or krypton ions.

11. Process according to claim 1, characterized in that the ions are krypton ions.

12. Film with a thickness of 0.1 μm to 1 mm and having in its thickness a structure constituted successively by a first semimetallic layer, a second electrically insulating layer and a third semimetallic layer, the electrically insulating layer being constituted by an organic polymer and the semimetallic layer being constituted by a derivative of said organic polymer.

13. Film with a thickness of 0.1 μm to 1 mm and having in its thickness a structure constituted successively by an electrically insulating layer, a second semimetallic layer and a third electrically insulating layer, the electrically insulating layers being constituted by an organic polymer and the semimetallic layer being constituted by a derivative of said organic polymer.

14. Film according to either of the claims 12 and 13, characterized in that the organic polymer is chosen from the group including polyolefins and their derivatives, fluorine polymers and their derivatives, chlorine polymers and their derivatives, fluorochlorine polymers and their derivatives, hydrohalogen polymers and their derivatives, pseudo-halogen polymers and their derivatives, polyamides, polyimides, polyesters, polyacrylonitrile and its derivatives, polydicyanoethylene and its derivatives, polysilanes, polysiloxanes, polysulphones, polyethers and polyphosphazines.

15. Film according to either of the claims 12 and 13, characterized in that the organic polymer is polyvinylidene fluoride, polyvinylidene chloride or polytetrafluoroethylene.

16. Film according to either of the claims 12 and 13, characterized in that the derivative of the organic polymer constituting the semimetallic layer has a polyallene structure.

FIG. 1

FIG. 2